(19) Europäisches Patentamt
European Patent Office
Office européen des brevets

(11) **EP 4 675 772 A1**

(12) **EUROPEAN PATENT APPLICATION**

(43) Date of publication:
07.01.2026 Bulletin 2026/02

(21) Application number: 25180617.0

(22) Date of filing: 04.06.2025

(51) International Patent Classification (IPC):
$H01M\ 50/103^{(2021.01)}$   $H01M\ 50/308^{(2021.01)}$
$H01M\ 50/333^{(2021.01)}$   $H01M\ 50/342^{(2021.01)}$
$H01M\ 50/375^{(2021.01)}$   $H01M\ 50/15^{(2021.01)}$

(52) Cooperative Patent Classification (CPC):
H01M 50/3425; H01M 50/103; H01M 50/308;
H01M 50/333; H01M 50/375; H01M 50/15

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 03.07.2024 KR 20240087478

(71) Applicant: SAMSUNG SDI CO., LTD.
Yongin-si, Gyeonggi-do 17084 (KR)

(72) Inventor: SEOK, Shangchul
17084 Yongin-Si, Gyeonggi-do (KR)

(74) Representative: Gulde & Partner
Patent- und Rechtsanwaltskanzlei mbB
Berliner Freiheit 2
10785 Berlin (DE)

(54) **SECONDARY BATTERY**

(57) The present disclosure relates to a battery cell, including: an electrode assembly including a first electrode and a second electrode, a case configured to accommodate the electrode assembly and including an open area on a first side, a cap plate configured to seal the open area and including a first terminal and electrically connected to the first electrode and a second terminal electrically connected to the second electrode, a first vent on the cap plate, and a second vent on a lower surface of the case opposite to the cap plate.

FIG. 1

EP 4 675 772 A1

## Description

## BACKGROUND

### 1. Field

The present disclosure relates to a secondary battery and, more particularly, to a secondary battery including a vent allowing electrolyte within a battery cell to be discharged therethrough.

### 2. Description of the Related Art

Related art battery cells have a single vent structure at the upper portion of the cell. The vent structure operates at a pressure of approximately 7 bar. The vent is configured to open in order to release the internal pressure in response to the pressure inside the battery cell increasing to be equal to or greater than a predetermined level. In this manner, the vent acts before a pre-ignition phase of the battery cell to prevent an explosion. However, in some known examples, the conventional vent structure may cause some problems.

For example, in a case in which the inside of a battery cell heats up, a flammable electrolyte may remain within the cell. The electrolyte may be easily ignited at high temperatures, and the high temperature within the battery cell may increase the risk of fire. Even in a case where the vent is opened, the electrolyte may not be sufficiently removed, thereby leaving the flammable material within the cell.

In addition, the electrolyte remaining within the battery cell may undergo a chemical reaction and produce an explosive gas. Such a gas may further increase the pressure inside the battery cell, thereby accelerating the phenomenon of thermal runaway. The thermal runaway may increase the battery cell temperature rapidly, thereby resulting in a larger fire or explosion. Accordingly, the stability and safety of the battery cell may be seriously jeopardized.

Therefore, new approaches to battery cell design are needed to safely remove the electrolyte while effectively controlling the internal pressure. This may minimize or at least reduce the risk of ignition and explosion of battery cells and thereby achieve safe energy storage devices.

The above information disclosed in this Background section is for enhancement of understanding of the background of the present disclosure, and therefore, it may contain information that does not constitute related (or prior) art.

## SUMMARY

The present disclosure provides a secondary battery and a battery pack having a vent configured to overcome the above-described problems.

These and other aspects and features of the present disclosure will be described in or will be apparent from the following description of embodiments of the present disclosure.

In order to solve the technical problems above, a battery cell in accordance with some embodiments of the present disclosure may include an electrode assembly including a first electrode and a second electrode, a case configured to accommodate the electrode assembly and including an open area on a first side, a cap plate including a first terminal sealing the open area and electrically connected to the first electrode and a second terminal electrically connected to the second electrode, a first vent on the cap plate, and a second vent on a lower surface of the case opposite to the cap plate.

According to some embodiments, the first vent may be configured to be opened in response to a pressure applied to the first vent exceeding a predetermined first threshold pressure, and the second vent may be configured to be opened in response to a pressure applied to the second vent exceeding a predetermined second threshold pressure.

According to some embodiments, the second threshold pressure may be set substantially equal to the first threshold pressure.

According to some embodiments, the second vent may overlap the electrode assembly in a vertical direction (e.g. x-direction), and a weight of the electrode assembly may be transferred to the second vent.

According to some embodiments, the battery cell may include a spacer between the electrode assembly and the second vent, wherein the spacer transfers the weight of the electrode assembly to the second vent.

According to some embodiments, the spacer may include an insulating material such as polymer.

According to some embodiments, the spacer may include a base contacting a lower surface of the electrode assembly, and a protrusion protruding from the base and contacting the second vent in which an area of the base in a horizontal direction (e.g. y-direction) may be greater than an area of the protrusion in the horizontal direction (e.g. y-direction).

According to some embodiments, a thickness of the first vent in a vertical direction (e.g. x-direction) may be less than a thickness of the cap plate in the vertical direction (e.g. x-direction), and a thickness of the second vent in the vertical direction (e.g. x-direction) may be less than a thickness of the lower surface of the case in the vertical direction (e.g. x-direction). For example, the thickness of the first vent (in e.g. x-direction) may be thicker than the thickness of the second vent (in e.g. x-direction). This may allow the first threshold pressure and/or the first threshold temperature corresponding to the opening condition of the first vent may be set higher than the second threshold pressure and/or the second threshold temperature of the second vent, respectively.

According to some embodiments, the first vent may include a first hole on the cap plate and a first cover attached to the cap plate to seal the first hole, and the second vent may include a second hole on the lower surface and a second cover attached to the lower surface to seal the second hole.

According to some embodiments, the first cover may be attached to the cap plate by an adhesive on a side surface of the first cover.

According to some embodiments, the first cover may extend into a fitting member of the cap plate.

According to some embodiments, the first cover may be attached to the cap plate by a spring connected to a first side of the first cover.

According to some embodiments, the first cover may be configured to be opened due to compression or expansion of the spring in response to a pressure applied to the first vent exceeding a predetermined threshold pressure.

According to some embodiments, the first cover may include an insulating material, such as a polymer, which melts in response to a temperature exceeding a predetermined threshold temperature.

According to some embodiments, the battery cell may include a first spacer between the electrode assembly and the first vent, and a second spacer between the electrode assembly and the second vent.

According to some embodiments, the case may be a prismatic case.

According to various embodiments of the present disclosure, a battery pack may include two or more battery cells.

According to some embodiments, the first vent may be configured to be opened in response to a pressure applied to the first vent exceeding a predetermined first threshold pressure, and the second vent may be configured to be opened in response to a pressure applied to the second vent exceeding a predetermined second threshold pressure.

According to some embodiments, the second vent may overlap the electrode assembly in a vertical direction (e.g. x-direction), and a weight of the electrode assembly may be transferred to the second vent.

According to some embodiments, the battery pack may include a spacer between the electrode assembly and the second vent, wherein the spacer transfers the weight of the electrode assembly to the second vent.

According to a variety of embodiments of the present disclosure, a structure in which the respective positions of the plurality of vents are taken into account without a separate device or circuit for detecting the positions of the vents may be implemented by using the pressure caused by the weight of the electrode assembly received within the battery cell, even if the threshold pressures, which are the opening conditions of the vents including a first vent and a second vent, are set to be substantially the same. That is, because the lower vent is opened before the upper vent so that the electrolyte is discharged first through the opened lower vent and then the gas is subsequently discharged through the upper vent, which is opened later, the structure that discharges the electrolyte first and the gas later (subsequently) may be efficiently implemented even if the battery cell is mounted in a changed direction. In addition, the structure that discharges the electrolyte first and the gas later (subsequently) may be designed using vents having the same (or substantially the same) critical pressure instead of designing vents with having critical pressures, thereby improving the economic efficiency of the battery cell.

According to a variety of embodiments of the present disclosure, a pressure caused by the weight of the electrode assembly may be used to design the lower vent to be opened before the upper vent, while still setting different threshold pressures for the respective vents, thereby increasing the freedom of design for the structure that discharges the electrolyte first and internal gas later (subsequently).

According to a variety of embodiments of the present disclosure, with the structure that discharges the electrolyte first and the internal gas later (subsequently), the time at which the electrolyte is discharged first may be changed by adjusting the cross-sectional area size of the protrusion of the spacer, because the weight of the electrode assembly is not easily changed. In addition, the pressure caused by the weight of the electrode assembly transferred to the vent may be easily adjusted.

According to a variety of embodiments of the present disclosure, the structure that discharges the electrolyte first and the internal gas later (subsequently) may be readily implemented by using the weight of the electrode assembly received within the battery cell without the need for a device or circuit to separately detect the mounting direction of the battery cell, thereby promoting both economic efficiency and reliability of the battery cell.

According to a variety of embodiments of the present disclosure, the opening conditions of the vent may be determined by a variety of factors, such as the gas pressure inside the battery cell, the pressure caused by the self-gravity of the electrode assembly, the melting point of the cover as a function of the internal temperature of the battery cell, and the melting point of the adhesive as a function of the internal temperature of the battery cell. Accordingly, the structure that discharges the electrolyte first and the internal gas later (subsequently) may be designed more precisely.

However, aspects and features of the present disclosure are not limited to those described above, and other aspects and features not mentioned will be clearly understood by a person skilled in the art from the detailed description, described below

## BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

FIG. 1 illustrates a battery cell according to embodiments of the present disclosure;
FIG. 2 illustrates a method of opening a vent according to embodiments of the present disclosure;
FIG. 3 illustrates a method of opening a vent according to embodiments of the present disclosure;
FIG. 4 illustrates a method of opening a vent according to embodiments of the present disclosure;
FIG. 5A illustrates a second vent being opened where a battery cell according to embodiments of the present disclosure is mounted in a forward direction;
FIG. 5B illustrates the first vent being opened where the battery cell according to embodiments of the present disclosure is mounted in a reverse direction;
FIG. 6 illustrates the second vent and a third vent being opened at the same time where a battery cell according to embodiments of the present disclosure is mounted diagonally;
FIGS. 7 illustrates a battery pack according to one or more embodiments of the present disclosure; and
FIGS. 8 illustrates a battery pack according to one or more embodiments of the present disclosure.

## DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are intended to describe the embodiments of the present disclosure and are not intended to limit the disclosure.

In embodiments of prismatic batteries according to the present disclosure, one of prismatic, pouch, or cylindrical batteries is selected, and the selected battery is described as having a general structure. For technologies generally applicable, the general structure of prismatic, pouch, or cylindrical batteries is described.

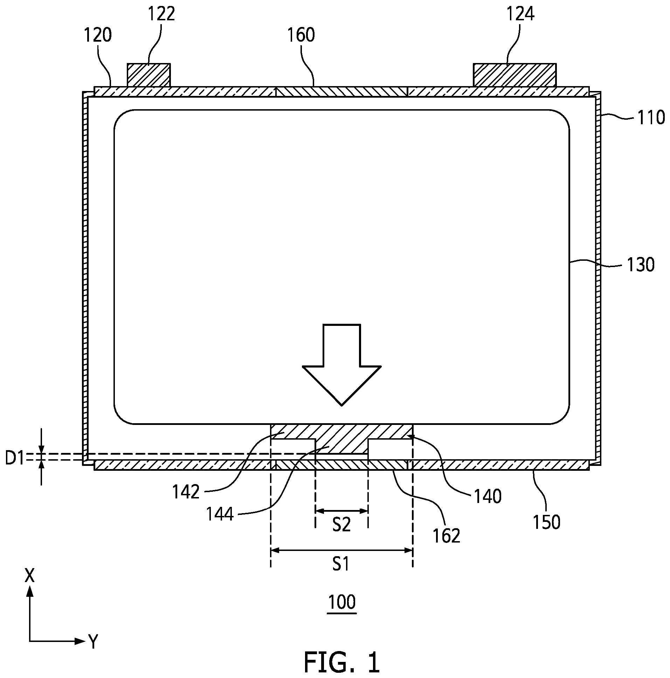

FIG. 1 illustrates a battery cell 100 according to embodiments of the present disclosure. The battery cell 100 includes: an electrode assembly 130 including a first electrode and a second electrode; a case 110 configured to accommodate the electrode assembly 130 and including an open area on a first side; a cap plate 120 including a first terminal 122 sealing the open area and electrically connected to the first electrode and a second terminal 124 electrically connected to the second electrode; a first vent 160 on the cap plate 120; and a second vent 162 on a lower surface of the case 110 opposite to the cap plate 120.

In some embodiments, an electrode assembly 130 may be formed by winding or stacking a stack of a first electrode plate, a separator, and a second electrode plate, which are formed as thin plates or films. When the electrode assembly 130 is a wound stack, a winding axis may be parallel to the longitudinal direction (e.g., the y direction) of the case 110. In other embodiments, the electrode assembly 130 may be a stack type rather than a winding type, and the shape of the electrode assembly 130 is not limited in the present disclosure. In addition, the electrode assembly 130 may be a Z-stack electrode assembly 130 in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case 110, and the number of electrode assemblies in the case 110 is not limited in the present disclosure. The first electrode plate of the electrode assembly 130 may act as a negative electrode, and the second electrode plate may act as a positive electrode. Of course, the reverse is also possible.

In some embodiments, the first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly 130, or the first electrode tab may protrude to one side of the electrode assembly 130 more than (e.g., farther than or beyond) the separator without being separately cut.

In some embodiments, the second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (e.g., the opposite side) of the electrode assembly 130 when the second electrode plate is manufactured, or the second electrode plate may protrude to the other side of the electrode assembly 130 more than (e.g., farther than or beyond) the separator without being separately cut.

In some embodiments, the first electrode tab may be located on the left side of the electrode assembly 130, and the second electrode tab may be located on the right side of the electrode assembly 130. In other embodiments, the first electrode tab and the second electrode tab may be located on one side of the electrode assembly 130 in the same direction. Here, for convenience of description, the left and right sides are defined according to the secondary battery as oriented in FIG. 1, and the positions thereof may change when the secondary battery is rotated left and right or up and down.

In some embodiments, the first electrode tab of the first electrode plate and the second electrode tab of the second electrode plate may be respectively positioned at both ends (e.g., opposite ends) of the electrode assembly 130. In some embodiments, the electrode assembly 130 may be accommodated in the case 110 along with an electrolyte. In addition, in the electrode assembly 130, the first current collector and the second current collector may be welded and connected to the first electrode tab of the first electrode plate and the second electrode tab of the second electrode plate exposed on both sides, respectively, to then be positioned thereat, respectively.

In one or more embodiments, the case 110 may receive (accommodate) the electrode assembly 130 and an electrolyte therein. In one or more embodiments, the case 110 may have an open side, and the electrode assembly 130 may be received within the case 110. The cap plate 120 may seal the open side of the case 110. In addition, the cap plate 120 may include an inlet through which the electrolyte may be injected into the case 110. After electrolyte injection is complete, the inlet may be sealed using a sealing device, such as a plug.

In one or more embodiments, a first terminal 122 and a second terminal 124 may be on the cap plate 120. The first terminal 122 may be electrically connected to a first electrode of the electrode assembly 130 and may penetrate the cap plate 120, and the second terminal 124 may be electrically connected to a second electrode and may penetrate the cap plate 120.

In one or more embodiments, the vent 160 may be on the cap plate 120. The vent 160 may be configured to open in response to the internal pressure of the battery cell 100 exceeding a predetermined threshold pressure. The threshold pressure may be set differently depending on, for example, the application, material, and purpose of the secondary battery. For example, a relatively high threshold pressure may be set for a secondary battery in which the internal pressure of the case 110 is maintained at a high pressure at an average compared to other applications due to short charge-discharge cycles during use. In another example, a relatively high threshold pressure may be set for a secondary battery that is made of a material and/or in a design that has relatively high heat and/or high-pressure resistance. In contrast, a relatively low threshold pressure may be set for a secondary battery made of a material and/or in a design that has relatively low heat and/or pressure resistance. In addition, or in another embodiment, the vent 160 may be configured to open in response to the internal temperature exceeding a predetermined threshold temperature. With this configuration, the vent 160 may be configured to prevent (or at least mitigate) the battery cell 100 from exploding and/or prevent (or at least mitigate) an exothermic chain reaction of battery cells adjacent to the battery cell 100.

In one or more embodiments, the vent 160 may include a hole and a cover. The hole of the vent 160 may be configured to function as a passage allowing gas within the case 110 to be discharged therethrough and/or electrolyte within the case 110 to be discharged therethrough, and the cover of the vent 160 may be attached to seal the hole of the vent 160 and may be made of a variety of materials (e.g. a polymer or a metal) that may break in response to a pressure applied to the vent 160 exceeding a predetermined threshold pressure and/or a temperature applied to the vent 160 exceeding a predetermined threshold temperature.

In one or more embodiments, the vent 160 may be formed of polycarbonate (PC). The thickness of the vent 160 may range from 0.05 mm to 0.2 mm. The thickness of the cap plate 120 may range from 1.5 mm to 3.0 mm. The thickness of the case 110 may range from 0.8 mm to 1.5 mm. Preferably, the vent 160 may be formed of polycarbonate (PC) and the thickness of the vent 160 may range from 0.05 mm to 0.2 mm.

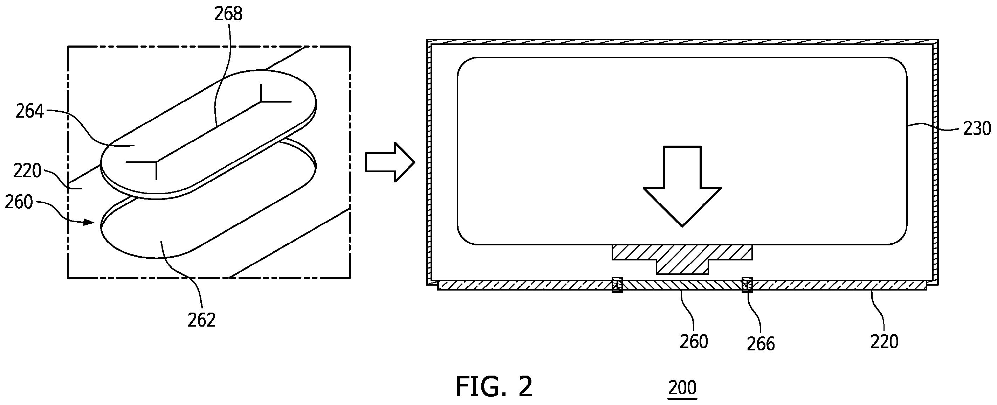

The manner of attaching the cover, the material of the cover, and the details of breaking the cover to open the vent 160 will be described later with reference to FIGS. 2, 3, and 4.

According to a comparative example, in a conventional battery cell structure having a vent provided only on the cap plate of the battery cell, even if the vent is operated to allow the gas within the battery cell to be discharged therethrough when the battery cell circuit is shortcircuited or the battery cell is heated due to external conditions, a flammable electrolyte remains within the battery cell. The cell structure of the comparative example may therefore have the problem of accelerated thermal runaway caused by battery cell heating.

In this regard, embodiments of the present disclosure may include a dual structure that allows the electrolyte within the battery cell to be discharged first and the gas within the battery cell to be discharged later (e.g., subsequently). The battery cell according to embodiments of the present disclosure may solve the structural problem of conventional battery cells that occurs when the internal pressure or internal temperature of the battery cell increases rapidly. The battery cell according to embodiments of the present disclosure can be implemented as a dual-vent structure including a plurality of vents including a first vent and a second vent, wherein a lower vent of the first vent and the second vent is configured to be opened first to discharge the electrolyte therethrough, and the remaining upper vent is configured to be opened later (e.g., subsequently) to discharge the gas therethrough.

In one embodiment, the case 110 may receive (accommodate) the electrode assembly 130 and the electrolyte therein, and may include one open side. The cap plate 120 may seal the open side of the case 110, and may include a first vent 160. A second vent 162 may be on one side of the case 110 opposite the cap plate 120. The first vent 160 may be configured to open in response to an internal pressure applied to the first vent 160 exceeding a predetermined first threshold pressure and/or an internal temperature applied to the first vent 160 exceeding a predetermined first threshold temperature. In addition, the second vent 162 may be configured to open in response to an internal pressure of battery cell 100 applied to the second vent 162 exceeding a predetermined second threshold pressure and/or an internal temperature applied to second vent 162 exceeding a predetermined second threshold temperature.

In embodiments, the first vent 160 may include a first hole and a first cover, and the second vent 162 may include a second hole and a second cover. Each of the first hole of the first vent 160 and the second hole of the second vent 162 may be configured to function as a passage allowing gas within the case 110 to be discharged therethrough or electrolyte within the case 110 to be discharged therethrough. The first cover of the first vent 160 and the second cover of the second vent 162 may be attached to seal the first hole and the second hole, respectively. In addition, the first cover may include a variety of materials that are configured to break in response to a pressure applied to the first vent 160 exceeding a predetermined first threshold pressure and/or a temperature applied to the first vent 160 exceeding a predetermined first threshold temperature. In addition, the second cover may include a variety of materials that are configured to break in response to a pressure applied to the second vent 162 exceeding a predetermined second threshold pressure and/or a temperature applied to the second vent 162 exceeding a predetermined second threshold temperature. Such suitable material may comprise polymers or metals.

In another embodiment, the case 110 may have a first open side and a second open side opposite to the first open side, and the electrode assembly 130 may be received (accommodated) within the case 110. The first cap plate 120 may seal the first open side of the case 110, and a second cap plate 150 may seal the second open side of the case 110. In addition, a first terminal 122 and a second terminal 124 may be on the first cap plate 120. The first terminal 122 and the second terminal 124 may be electrically connected to the first electrode and second electrode of the electrode assembly, respectively, and may penetrate the first cap plate 120. In one or more embodiments, the first vent 160 may be on the first cap plate, and the second vent 162 may be on the second cap plate 150. The functions, structures, and materials of the first vent 160 and the second vent 162 are the same as those described above.

In one or more embodiments, the first threshold pressure and/or the first threshold temperature corresponding to the opening condition of the first vent may be set higher than the second threshold pressure and/or the second threshold temperature of the second vent, respectively. This embodiment may therefore have a structure in which the opening condition of the second vent is easier to achieve than the opening condition of the first vent. In an embodiment in which the battery cell is mounted in a forward direction, the first vent on the cap plate having the first terminal and the second terminal may be on the upper side, and the second vent on the opposite side may be on the lower side. In this embodiment, the internal pressure or the internal temperature of the battery cell may be increased to first reach a second critical pressure or a second critical temperature of the lower second vent. After a predetermined time has elapsed, the first threshold pressure or the second threshold temperature of the first vent may be reached. Accordingly, the second vent may open before the first vent. Because the lower second vent is opened before the upper first vent, the electrolyte within the battery cell may be discharged to the outside first and the gas may be discharged later (e.g., subsequently).

In one or more embodiments, in an embodiment in which the battery cells are mounted in a reverse direction, the first vent may be on the lower side and the second vent may be on the upper side. In this embodiment, the lower first vent may be configured to be opened first so that the electrolyte is discharged out first before the gas is discharged. However, if the first critical pressure or the first critical temperature of the first vent is set higher than the second critical pressure or the second critical temperature of the second vent, the second vent on the upper side may be opened first in response to the increase of the internal pressure or the internal gas within the battery cell, and thus the structure for discharging electrolyte first and gas later may not be implemented. In this embodiment, a configuration for determining which of the first vent and the second vent is on the upper side or the lower side is additionally desired.

In embodiments, the configuration for determining which of the first vent and the second vent is positioned on the upper side or the lower side may be implemented using the weight of the electrode assembly received (accommodated) within the battery cell. That is, the first vent or the second vent may be subjected to a pressure caused by the internal gas of the battery cell or a pressure caused by the weight of the electrode assembly.

For example, in an embodiment in which the first vent 160 is on the upper side and the second vent 162 is on the lower side, the second vent 162 may be subjected not only to a pressure caused by the gas within the battery cell 100, but also a pressure caused by the weight of the electrode assembly 130 due to gravity. In contrast, considering the downward direction of gravity, only the pressure caused by the gas within the battery cell 100 may be applied to the first vent 160 on the upper side. That is, the pressure applied to the first vent 160 may be only the pressure caused by the gas within the battery cell 100, and the pressure applied to the second vent 162 may include both the pressure caused by the gas within the battery cell 100 and the pressure caused by the weight of the electrode assembly 130. Accordingly, even if the first threshold pressure of the first vent 160 and the second threshold pressure of the second vent 162 are set to be the same, the opening condition of the second vent 162 may be reached first, so that the second vent 162 on the lower side may be opened first and the electrolyte may be discharged through the open second vent 162. Thereafter, in response to the opening condition of the first vent 160 being reached, the gas within the battery cell 100 may be discharged through the first vent 160.

In another embodiment, the first vent 160 may be on the lower side and the second vent 162 may be on the upper side. In this embodiment, the pressure applied to the first vent 160 includes not only the pressure caused by the gas within the battery cell 100, but also the pressure caused by the weight of the electrode assembly 130 due to gravity, and the pressure applied to the second vent 162, which is on the upper side, experiences only the pressure caused by the gas within the battery cell 100. Accordingly,, even if the first threshold pressure of the first vent 160 and the second threshold pressure of the second vent 162 are set to be the same (or substantially the same), the opening condition of the first vent 160 may be reached first, so that the first vent 160 positioned on the lower side may be opened first and the electrolyte may be discharged through the open first vent 160. Thereafter, in response to the opening condition of the second vent 162 being reached, the gas within the battery cell 100 may be discharged through the second vent 162.

With this configuration, a structure in which the respective positions of the plurality of vents are taken into account without a separate device or circuit for detecting the positions of the vents may be implemented by using the pressure caused by the weight of the electrode assembly 130 received (accommodated) within the battery cell 100, even if the threshold pressures, which are the opening conditions of the vents including the first vent 160 and the second vent 162, are set to be the same (or substantially the same). That is, because the lower vent is opened before the upper vent so that the electrolyte is discharged first through the opened lower vent and then the gas is discharged through the upper vent, which is opened later (subsequently), the structure that discharges electrolyte first and gas later may be efficiently implemented even if the battery cell 100 is mounted in different directions (i.e., the direction in which the battery cell 100 is mounted is changed). In addition, the structure that discharges electrolyte first and the gas later (subsequently) may be designed using vents having the same (or substantially the same) critical pressure instead of designing vents with different critical pressures, thereby improving the economic efficiency of the battery cell 100.

In one or more embodiments, the battery cell 100 may include a spacer 140 between the electrode assembly 130 and the second vent 162. In one or more embodiments, the spacer 140 may include a base 142 configured to contact a first side of the electrode assembly 130 and a protrusion 144 protruding from the base 142 and configured to contact a first side of the second vent 162.

In one or more embodiments, the size relationship between a cross-sectional area S1 contacted by the base 142 of the electrode assembly 130 and the spacer 140 and a cross-sectional area S2 contacted by the protrusion 144 of the spacer 140 and the second vent 162 is not specifically limited. However, with respect to the structural stability of the electrode assembly 130 received within the battery cell 100, each of the cross-sectional areas S1 and S2 may be configured to have a suitable area relative to the size of the first side of the electrode assembly 130. In addition, in one or more embodiments, the initial distance D1 between the protrusion 144 of the spacer 140 and the second vent 162 may be approximately 0.1 mm or more, preferably 0.1 mm to 1.0 cm.

In one or more embodiments, because the spacer 140 is configured to apply a pressure caused by the weight of the electrode assembly 130 to the second vent 162, the cross-sectional area S2 may be equal (or substantially equal) to or less than the cross-sectional area of the second vent 162 in order for the spacer 140 to effectively apply the weight of the electrode assembly 130 to the second vent 162.

In one or more embodiments, the pressure caused by the weight of the electrode assembly 130 may be transferred to the lower vent of the first vent 160 and the second vent 162 by gravity without the spacer 140. However, without the configuration of the spacer 140, the weight of the electrode assembly 130 may not be transferred evenly or concentrically to the lower vent, and the pressure applied to the lower vent and the pressure applied to the upper vent may not be significantly different. Accordingly, without the spacer 140, it may be difficult to implement the structure for discharging the electrolyte first and the gas later (subsequently).

In one or more embodiments, with the configuration of the spacer 140, the pressure transferred to the second vent 162 may include a sum of the pressure $P_{gas}$ caused by the gas within the battery cell 100 and the pressure $P_{JR}$ caused by the weight of the electrode assembly 130. That is, the pressure transferred to the second vent 162 may be represented by the following formula, where the subscript "2" refers to the second vent 162:

$$P_2 \approx P_{2_{JR}} + P_{2_{gas}}$$

In one or more embodiments, as shown in FIG. 1, if the weight of the electrode assembly 130 is W (in Newtons (N)), and the cross-sectional area of the protrusion of the spacer 140 in contact with the lower second vent 162 is $S_e$, the pressure $P_{2_{JR}}$ caused by the weight of the electrode assembly 130 transferred to the second vent 162 may be represented by the following formula:

$$P_{2_{JR}} = \frac{W}{S_e} \ [Pa; \ Pascal]$$

Thus, the pressure $P_2$ transferred to the second vent 162 may be represented by the following formula:

$$P_2 \approx P_{2_{JR}} + P_{2_{gas}} = \frac{W}{S_e} + P_{2_{gas}}$$

In one embodiment, if the second critical pressure is $P_{2_{th}}$, which is the opening condition of the second vent 162, the pressure $P_{2_{open_{gas}}}$ caused by the internal gas upon opening of the second vent 162 may be summarized as follows. For reference, in the initial stage of the design, the ratio of the pressure applied to the lower vent by the weight of the electrode assembly 130 to the threshold pressure of the lower vent may be between approximately 5% and approximately 20%.

$$P_{2open_{gas}} = P_{th} - \frac{W}{S_e}$$

This configuration may provide the structure that is configured to discharge the electrolyte first and the internal gas later (subsequently), and the time at which the electrolyte is discharged first may be changed by adjusting the cross-sectional area size $S_e$ of the

protrusion of the spacer 140, because the weight W of the electrode assembly 130 is not easily changed. In addition, the pressure caused by the weight of the electrode assembly 130 transferred to the vent may be adjusted by adjusting the cross-sectional area size $S_e$ of the protrusion of the spacer 140.

FIG. 2 illustrates a method of opening a vent 260 according to embodiments of the present disclosure. In embodiments, the vent 260 may include a hole 262 and a cover 264. The hole 262 may serve as a passage for the electrolyte or internal gas to be discharged when the vent 260 is opened, and the cover 264 may serve to cover the hole 262 to seal the vent 260 until the vent 260 is opened.

According to embodiments, the cover 264 may include an insulating material configured to melt and open the vent 260 in response to the temperature inside the battery cell 200 reaching a predetermined threshold temperature.

According to one or more embodiments, the cover 264 with adhesive 266 applied to side portions thereof may be attached to the cap plate 220. The adhesive 266 may be configured to melt and open the vent 260 in response to the temperature inside the battery cell 200 reaching a predetermined threshold temperature.

According to one or more embodiments, the cover 264 includes a first line along which a notch 268 extends in the longitudinal direction of the cap plate 220, a first bent line having the shape of a parenthesis or angled bracket ">" and having a vertex connected to a first end of the first line, and a second bent line having the shape of a parenthesis or angled bracket "<" and having a vertex connected to a second end of the first line. However, the present disclosure is not limited thereto, and the notch 268 on the cover 264 may have a variety of different shapes.

With this configuration, the opening conditions of the vent 260 may be determined by a variety of factors, such as the gas pressure inside the battery cell 200, the pressure caused by the weight of the electrode assembly 230, the melting point of the cover 264 as a function of the internal temperature of the battery cell 200, and the melting point of the adhesive 266 as a function of the internal temperature of the battery cell 200. Accordingly, the structure that discharges electrolyte first and internal gas later may be designed precisely.

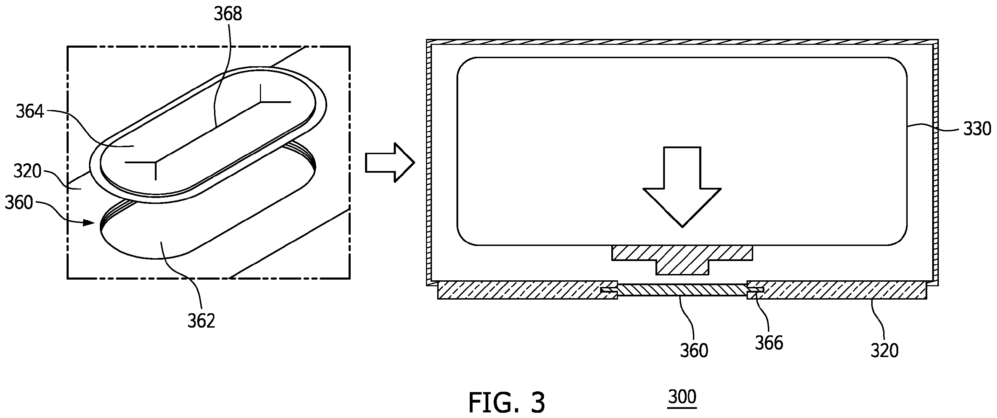

FIG. 3 illustrates a method of opening a vent 360 according to embodiments of the present disclosure. In one or more embodiments, the vent 360 may include a hole 362 and a cover 364. The hole 362 may serve as a passage for the electrolyte or internal gas to be discharged therethrough when the vent 360 is opened, and the cover 364 may be configured to cover the hole 362 to seal the vent 360 until the vent 360 is opened.

According to one or more embodiments, the cover 364 may include an insulating material configured to melt and open the vent 360 in response to the temperature inside the battery cell 300 reaching a predetermined threshold temperature.

According to one or more embodiments, a peripheral portion of the cover 364 may be inserted into and attached to a fitting member 366 of the cap plate 320. The cover 364 may be removed from the fitting member 366 in response to the pressure applied to the vent 360 reaching a predetermined threshold pressure.

According to one or more embodiments, the cover 364 includes a first line along which a notch 368 extends in the longitudinal direction of the cap plate 320, a first bent line having the shape of a parenthesis or angled bracket ">" and having a vertex connected to a first end of the first line, and a second bent line having the shape of a parenthesis or angled bracket "<" and having a vertex connected to a second end of the first line. However, the present disclosure is not limited thereto, and the notch 368 on the cover 364 may have a variety of different shapes.

With this configuration, the opening conditions of the vent 360 may be determined by a variety of factors, such as the gas pressure inside the battery cell 300, the pressure caused by the weight of the electrode assembly 330, the melting point of the cover 364 as a function of the internal temperature of the battery cell 300, and the adhesive force of the fitting member 366 of the battery cell 300. Accordingly, the structure that discharges electrolyte first and internal gas later may be designed precisely.

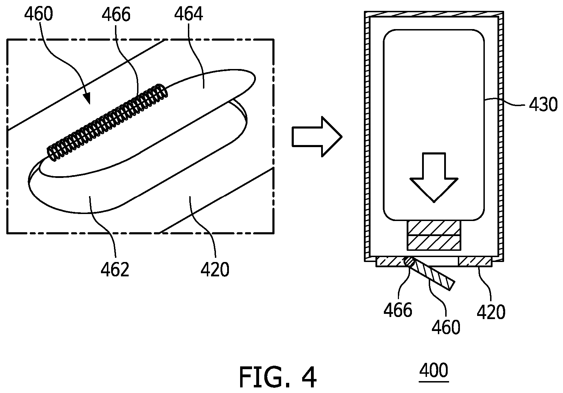

FIG. 4 illustrates a method of opening a vent 460 according to embodiments of the present disclosure. In one or more embodiments, the vent 360 may include a hole 462 and a cover 464. The hole 462 may serve as a passage for the electrolyte or internal gas to be discharged therethrough when the vent 460 is opened, and the cover 464 may be configured to cover the hole 462 to seal the vent 460 until the vent 460 is opened.

In one or more embodiments, the cover 464 may be attached to the cap plate 420 using an elastic member 466 including a spring on a side portion thereof to seal the hole 462. In response to the pressure applied to the vent 460 reaching a predetermined threshold pressure, the elastic member 466 may be compressed or expanded to open the vent 460. In contrast, in response to the pressure applied to the vent 460 not reaching the predetermined threshold pressure, the pressure inside the battery cell 400 may be maintained at or below a predetermined pressure.

With this configuration, the opening conditions of the vent 460 may be determined by a variety of factors, such as the gas pressure inside the battery cell 400, the pressure caused by the weight of the electrode assembly 430, the modulus of elasticity of the elastic member 466 configured to attach the cover 464 of the vent 460 to the cap plate 420. Accordingly, the structure that discharges electrolyte first and internal gas later (subsequently) may be designed precisely.

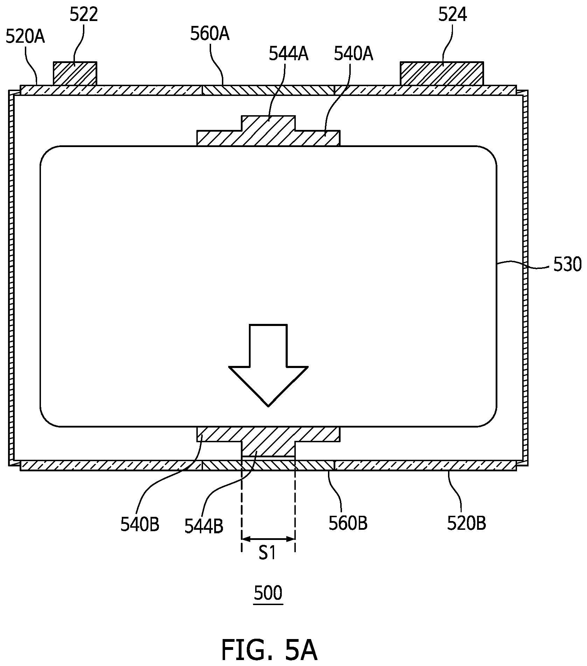

FIG. 5A illustrates a second vent 560B being opened in a configuration in which a battery cell 500 according to embodiments of the present disclosure is mounted in a forward direction. In one or more embodiments, a first vent 560A may be on a first cap plate 520A on which a first terminal 522 and a second terminal 524 are positioned, and the second vent 560B may be on a second cap plate 520B opposite to the first cap plate 520A. As shown, the battery cell 500 may be mounted in the forward direction such that the first vent 560A is on the upper side and the second vent 560B is on the lower side.

In embodiments including the spacer 540, the pressure transferred to the first vent 560A or the second vent 560B may include a sum of the pressure $P_{gas}$ caused by the gas inside the battery cell 500 and the pressure $P_{JR}$ caused by the weight of the electrode assembly 530. That is, the pressure $P_1$ transferred to the first vent 560A and the pressure $P_2$ transferred to the second vent 560B may be represented by the following formulae:

$$P_1 \approx P_{1_{JR}} + P_{1_{gas}}$$

$$P_2 \approx P_{2_{JR}} + P_{2_{gas}}$$

In one or more embodiments, as shown in FIG. 1, in a case in which the weight of the electrode assembly 530 is W [N] and the cross-sectional area of the second protrusion 562B of the second spacer 540B in contact with the lower second vent 560B is $S_e$, the pressure $P_{1_{JR}}$ caused by the weight of the electrode assembly 530 transferred to the first vent 560A and the pressure $P_{2_{JR}}$ caused by the weight of the electrode assembly 530 transferred to the second vent 560B may be expressed by the following formulae:

$$P_{1_{JR}} = 0$$

$$P_{2_{JR}} = \frac{W}{S_e} \ [Pa;\ Pascal]$$

Therefore, the pressure $P_1$ transferred to the first vent 560A and the pressure $P_2$ transferred to the second vent 560B may be expressed by the following formulae:

$$P_1 \approx P_{1_{JR}} + P_{1_{gas}} = 0 + P_{1_{gas}}$$

$$P_2 \approx P_{2_{JR}} + P_{2_{gas}} = \frac{W}{S_e} + P_{2_{gas}}$$

In one or more embodiments, if the pressures caused by the gas inside the battery cell 500 transferred to the first vent 560A and the second vent 560B have an equal value $P_{gas}$, the pressure $P_2$ transferred to the second vent 560B is greater than the pressure $P_1$ transferred to the first vent 560A as follows:

$$P_1 \approx P_{gas} < \frac{W}{S_e} + P_{gas} \approx P_2$$

In one or more embodiments, if the first threshold pressure $P_{1_{th}}$ and the second threshold pressure $P_{2_{th}}$ have an equal (or substantially equal) value $P_{th}$ according to the opening conditions of the first vent 560A and the second vent 560B, the lower second vent 560B may be configured to be opened first before the upper first vent 560A is opened.

In one or more embodiments, the pressure $P_{1open_{gas}}$ caused by the internal gas in which the first vent 560A is opened and the pressure $P_{2open gas}$ caused by the internal gas in which the second vent 560B is opened may be summarized as follows:

$$P_{1open_{gas}} = P_{th}$$

$$P_{2open_{gas}} = P_{th} - \frac{W}{S_e}$$

Accordingly, the lower second vent 560B may be opened more easily and/or earlier than the upper first vent 560A.

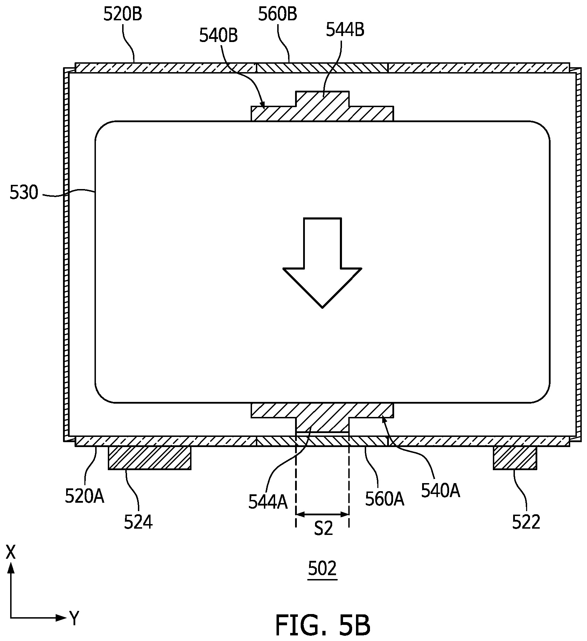

FIG. 5B illustrates an example in which the first vent 560A is opened in which the battery cell 500 according to embodiments of the present disclosure is mounted in a reverse direction. In one or more embodiments, the first vent 560A may be on the first cap plate 520A on which the first terminal 522 and the second terminal 524 are positioned, and the second vent 560B may be on the second cap plate 520B opposite to the first cap plate 520A. As shown, the battery cell 500 may be mounted in the reverse direction such that the first vent 560A is on the lower side and the second vent 560B is on the upper side.

In one or more embodiments including the spacer 540A, the pressure transferred to the first vent 560A or the second vent 560B may include a sum of the pressure $P_{gas}$ caused by the gas inside the battery cell 500 and the pressure $P_{JR}$ caused by the weight of the electrode assembly 530. That is, the pressure $P_1$ transferred to the first vent 560A and the pressure $P_2$ transferred to the second vent 560B may be represented by the following formulae:

$$P_1 \approx P_{1_{JR}} + P_{1_{gas}}$$

$$P_2 \approx P_{2_{JR}} + P_{2_{gas}}$$

In one or more embodiments, as shown in FIG. 1, in an embodiment in which the weight of the electrode assembly 530 is W [N] and the cross-sectional area of the first protrusion 544A of the spacer in contact with the lower first vent 560A is $S_e$, the pressure $P_{1_{JR}}$ caused by the weight of the electrode assembly 530 transferred to the first vent 560A and the pressure $P_{2_{JR}}$ caused by the weight of the electrode assembly 530 transferred to the second vent 560B may be expressed by the following formulae:

$$P_{1_{JR}} = \frac{W}{S_e} \ [Pa]$$

$$P_{2_{JR}} = 0$$

Therefore, the pressure $P_1$ transferred to the first vent 560A and the pressure $P_2$ transferred to the second vent 560B may be expressed by the following formulae:

$$P_1 \approx P_{1_{JR}} + P_{1_{gas}} = \frac{W}{S_e} + P_{1_{gas}}$$

$$P_2 \approx P_{2_{JR}} + P_{2_{gas}} = 0 + P_{2_{gas}}$$

In one or more embodiments, if the pressures caused by the gas inside the battery cell 500 transferred to the first vent 560A and the second vent 560B have an equal value $P_{gas}$, the pressure $P_1$ transferred to the first vent 560A is greater than the pressure $P_2$ transferred to the second vent 560B as follows:

$$P_1 \approx \frac{W}{S_e} + P_{gas} > P_{gas} \approx P_2$$

In one or more embodiments, if the first threshold pressure $P_{1_{th}}$ and the second threshold pressure $P_{2_{th}}$ have an equal (or substantially equal) value $P_{th}$ according to the opening conditions of the first vent 560A and the second vent 560B, the lower first vent 560A may be opened first before the upper second vent 560B is opened.

In one or more embodiments, the pressure $P_{1open_{gas}}$ caused by the internal gas in which the first vent 560A is opened and the pressure $P_{2open gas}$ caused by the internal gas in which the second vent 560B is opened may be summarized as follows:

$$P_{1open_{gas}} = P_{th} - \frac{W}{S_e}$$

$$P_{2open_{gas}} = P_{th}$$

Accordingly, the lower first vent 560A may be opened more easily and/or earlier than the upper second vent 560B.

With this configuration, the structure that discharges the electrolyte first and internal gas later (subsequently) may be readily implemented by using the weight of the electrode assembly 530 received (accommodated) within the battery cell 500 without the need for a device or circuit to separately detect the mounting direction of the battery cell 500, thereby promoting both economic efficiency and reliability of the battery cell 500.

In other embodiments, even where the first threshold pressure $P_{1th}$ and the second threshold pressure $P_{2th}$ are different according to the opening conditions of the first vent 560A and the second vent 560B, the range of the pressure caused by the weight of the electrode assembly 530 may be appropriately calculated so that the first vent 560A positioned on the lower side is opened first before the second vent 560B positioned on the upper side is opened. For example, the range of the first critical pressure of the first vent 560A may be obtained by using the following expression of the pressure $P_{1open_{gas}}$ caused by the internal gas in a case where the first vent 560A is opened and the pressure $P_{2opengas}$ caused by the internal gas in a case where the second vent 560B is opened.

$$P_{1open_{gas}} = P_{1th} - \frac{W}{S_e}$$

$$P_{2open_{gas}} = P_{2th}$$

In other words, in order for the lower first vent 560A to be opened before the upper second vent 560B, $P_{1open_{gas}}$ must be less than $P_{2open_{gas}}$, and at least the value of $P_{1open_{gas}}$ must be greater than zero, which may be summarized as follows:

$$P_{1open_{gas}} = P_{1th} - \frac{W}{S_e} > 0$$

$$P_{2open_{gas}} > P_{1open_{gas}}$$

By combining the two expressions, the relationship between $P_{1th}$ and $P_{2th}$ may be obtained as follows:

$$P_{2th} + \frac{W}{S_e} > P_{1th} > \frac{W}{S_e}$$

With this configuration, the pressure caused by the weight of the electrode assembly 530 may be used to design the lower vent to be opened before the upper vent, while still setting different threshold pressures for the respective vents, thereby increasing the freedom of design for the structure that discharges the electrolyte first and internal gas later (subsequently).

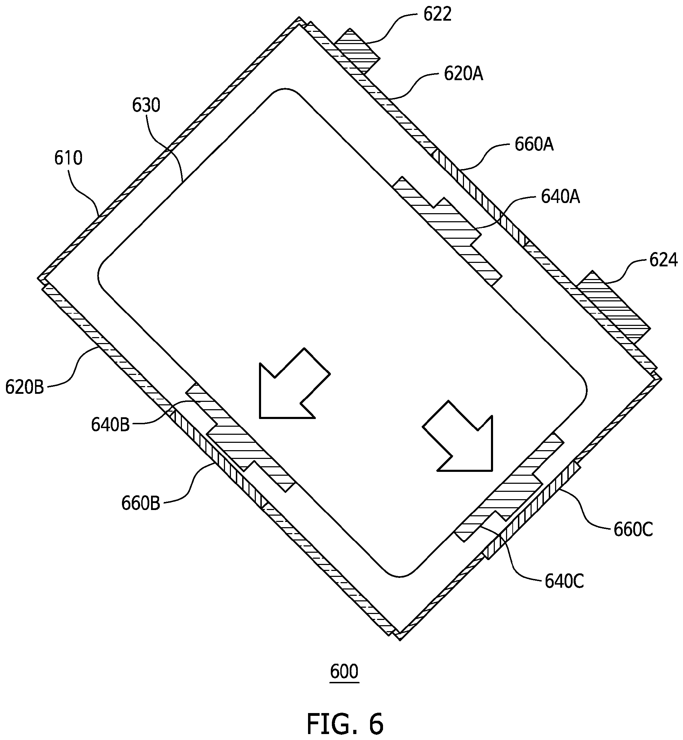

FIG. 6 illustrates an example in which the second vent 660B and a third vent 660C are opened at the same time (or substantially the same time) in an embodiment in which a battery cell according to embodiments of the present disclosure is mounted diagonally. In one or more embodiments, the case 610 may have a first open side and a second open side opposite the first open side, and the electrode assembly 630 may be received (accommodated) within the case 610. A first cap plate 620A may seal the first open side of the case 610, and a second cap plate 620B may seal the second open side of the case 610. In addition, a first terminal 622 and a second terminal 624 may be on the first cap plate 620A to be electrically connected to the first electrode and the second electrode of the electrode assembly, respectively, and may penetrate the first cap plate 620A.

In one or more embodiments, a first vent 660A may be on the first cap plate 620A, and a second vent 660B may be on the second cap plate 620B. In addition, the third vent 660C may be on a first side of the case 610 other than the first open side and the second open side.

In one or more embodiments, the battery cell 600 may include a first spacer 640A, a second spacer 640B, and a third spacer 640C between the electrode assembly 630 and the first vent 660A, the second vent 660B, and the third vent 660C, respectively. In one or more embodiments, the first spacer 640A may include a first base contacting a first side of the electrode assembly 630 and a first protrusion protruding from the first base and contacting a first side of the first vent 660A. Similarly, the second spacer 640B may include a second base and a second protrusion in relation to the electrode assembly 630 and the second vent 660B, and the third spacer 640C may include a third base and a third protrusion in relation to the electrode assembly 630 and the third vent 660C.

In one or more embodiments, the battery cell 600 may be mounted diagonally, tilted at a predetermined angle about a particular busbar of the battery cell 600. For example, as shown in FIG. 6, the battery cell 600 may be mounted tilted at a predetermined angle about a busbar of the case 610 that touches the ground, wherein the second cap plate 620B provided with the second vent 660B and the first side provided with the third vent 660C meet the busbar. In this embodiment, the pressure caused by the weight of the electrode assembly 630 may not be transferred to the first vent 660A in the direction of gravity, but may be transferred to the second vent 660B and the third vent 660C at a predetermined ratio. The ratio at which the second vent 660B and third vent 660C receive portions of the pressure caused by the weight of the electrode assembly 630 may be determined by the cross-sectional area of contact between the second protrusion of the second spacer 640B and the second vent 660B, the cross-sectional area of contact between the third protrusion of the third spacer 640C and the third vent 660C, the tilt angle of the battery cell 600, the dimensions of the electrode assembly 630 or the case 610, and the like. In addition, the opening conditions of the first vent 660A, the second vent 660B, and the third vent 660C may be determined by the gas pressure inside the battery cell 600 transferred to the respective vents, the pressure caused by the weight of the electrode assembly 630, the predetermined threshold pressures of the respective vents, and the like. Even in these cases, the structure that discharges the electrolyte first and internal gas later (subsequently) may be designed by adjusting the vent opening factors such that the second vent 660B or the third vent 660C is opened before the first vent 660A.

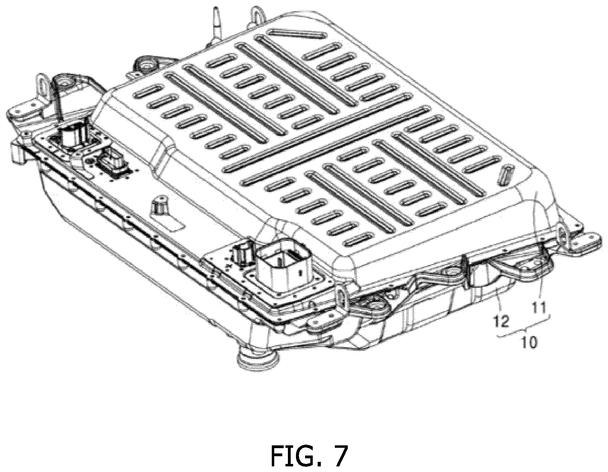

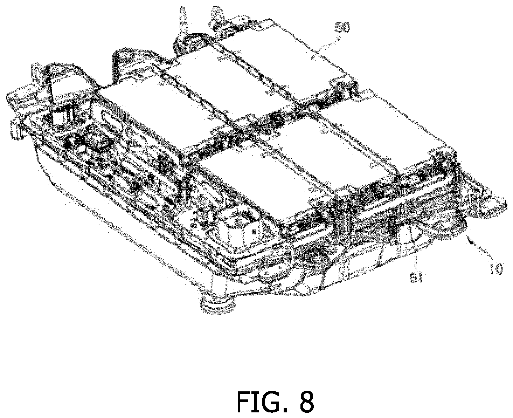

FIGS. 7 and 8 show a battery pack according to one or more embodiments of the present disclosure.

The battery pack may include a plurality of battery modules 50 and a housing 10 for accommodating the plurality of battery modules 50. For example, the housing 10 may include first and second housings 11 and 12 coupled in opposite directions through the plurality of battery modules 50. The plurality of battery modules 50 may be electrically connected to each other by using a bus bar 51, and the plurality of battery modules 50 may be electrically connected to each other in a series/parallel or series-parallel mixed method, thereby obtaining desired (e.g., required) electrical output.

The above-described preferred embodiments of the present invention are disclosed for illustrative purposes, and various modifications, changes, and additions within the scope of the invention will be apparent to those skilled in the art. Such modifications, changes, and additions should be considered as falling within the scope of the appended claims.

It should be understood by those skilled in the art that various substitutions, alterations, and modifications can be made without departing from the technical scope of the invention, and therefore, the present invention is not limited to the above-described embodiments and the accompanying drawings.

**<Description of Reference Symbols>**

100: battery cell
110: case
120: first cap plate
122: first terminal
124: second terminal
130: electrode assembly
132: pressure caused by self-weight of electrode assembly
140: spacer
142: base
144: protrusion
146: contacting cross-sectional area of spacer
148: contact distance of spacer
150: second cap plate
160: first vent
162: second vent

## Claims

1. A battery cell (100, 200, 300, 400, 500, 502, 600) comprising:

   an electrode assembly (130, 230, 330, 430, 530, 630) comprising a first electrode and a second electrode;
   a case (110, 310, 510, 610) configured to accommodate the electrode assembly (130, 230, 330, 430, 530, 630), the case (110, 310, 510, 610) comprising an open area on a first side of the case (110, 310, 510, 610);
   a cap plate (120, 220, 320, 420) sealing the open area and comprising a first terminal (122, 522, 622) electrically connected to the first electrode and a second terminal (124, 524, 624) electrically connected to the second electrode;
   a first vent (160, 260, 360, 460, 560A, 660A) on the cap plate (120, 220, 320, 420, 520A, 620A); and
   a second vent (162, 260, 360, 460, 560B, 660B) on a lower surface of the case (110, 310, 510, 610) opposite to the cap plate (120, 220, 320, 420, 520A, 620A).

2. The battery cell (100, 200, 300, 400, 500, 502, 600) as claimed in claim 1, wherein the first vent (160, 260, 360, 460, 560A, 660A) is configured to be opened in response to a pressure applied to the first vent (160, 260, 360, 460, 560A, 660A) exceeding a predetermined first threshold pressure, and wherein the second vent (162, 260, 360, 460, 560B, 660B) is configured to be opened in response to a pressure applied to the second vent (162, 260, 360, 460, 560B, 660B) exceeding a predetermined second threshold pressure.

3. The battery cell (100, 200, 300, 400, 500, 502, 600) as claimed in claim 2, wherein the second threshold pressure is equal to the first threshold pressure.

4. The battery cell (100, 200, 300, 400, 500, 502, 600) as claimed in claim 2, wherein the second vent (162, 260, 360, 460, 560B, 660B) overlaps the electrode assembly (130, 230, 330, 430, 530, 630) in a vertical direction, and wherein a weight of the electrode assembly (130, 230, 330, 430, 530, 630) is transferred to the second vent (162).

5. The battery cell (100, 200, 300, 400, 500, 502, 600) as claimed in one of the preceding claims, further comprising a spacer (140, 540A, 540B, 640A, 640B) between the electrode assembly (130, 230, 330, 430, 530, 630) and the second vent (162, 260, 360, 460, 560B, 660B), wherein the spacer (140, 540A, 540B, 640A, 640B) is configured to transfer the weight of the electrode assembly (130, 230, 330, 430, 530, 630) to the second vent (162, 260, 360, 460, 560B, 660B).

6. The battery cell (100, 200, 300, 400, 500, 502, 600) as claimed in claim 5, wherein the spacer (140, 540A, 540B, 640A, 640B) comprises an insulating material.

7. The battery cell (100, 200, 300, 400, 500, 502, 600) as claimed in claim 5 or 6, wherein the spacer (140, 540B, 640B) comprises:

> a base (142, 542B) contacting a lower surface of the electrode assembly (130, 230, 330, 430, 530, 630);
> a protrusion (144, 544B) protruding from the base (142, 542B) and contacting the second vent (162, 260, 360, 460, 560B, 660B); and
> wherein an area of the base (142, 542B) in a horizontal direction is greater than an area of the protrusion (144, 544B) in the horizontal direction.

8. The battery cell (100, 200, 300, 400, 500, 502, 600) as claimed in one of the preceding claims, wherein a thickness of the first vent (160, 260, 360, 460, 560A, 660A) in a vertical direction is less than a thickness of the cap plate (120, 220, 420, 420, 520A, 620A) in the vertical direction, and
wherein a thickness of the second vent (162, 260, 360, 460, 560B, 660B) in the vertical direction is less than a thickness of the lower surface of the case (110, 310, 510, 610) in the vertical direction.

9. The battery cell (100, 200, 300, 400, 500, 502, 600) as claimed in one of the preceding claims, wherein the first vent (160, 260, 360, 460, 560A, 660A) comprises a first hole on the cap plate (120, 220, 420, 420, 520A, 620A) and a first cover (264, 364, 464) attached to the cap plate (120, 220, 420, 420, 520A, 620A) to seal the first hole (262, 362, 462), and
wherein the second vent (162, 260, 360, 460, 560B, 660B) comprises a second hole (262, 362, 462) on the lower surface and a second cover (264, 364, 464) attached to the lower surface to seal the second hole (262, 362, 462).

10. The battery cell (100, 200, ) as claimed in claim 9, wherein the first cover (264) is attached to the cap plate (220) by an adhesive (266) on a side surface of the first cover (264).

11. The battery cell (100300) as claimed in claim 9, wherein the first cover (364) extends into a fitting member (366) of the cap plate (320).

12. The battery cell (100, 400) as claimed in claim 9, wherein the first cover (464) is attached to the cap plate (420) by a spring connected to a first side of the first cover (464).

13. The battery cell (100400) as claimed in claim 12, wherein the first cover (464) is configured to open due to compression or expansion of the spring in response to a pressure applied to the first vent (160, 260, 360, 460, 560A, 660A) exceeding a predetermined threshold pressure.

14. The battery cell (100, 200, 300, 400, 500, 502, 600) as claimed in one of claims 9 to 11, wherein the first cover (264, 364) comprises an insulating material configured to melt in response to a temperature exceeding a predetermined threshold temperature.

15. The battery cell (500, 502, 600) as claimed in claim 1, further comprising:

> a first spacer (540A, 640A) between the electrode assembly (530, 630) and the first vent (560A, 660A); and
> a second spacer (540B, 640B) between the electrode assembly (530, 630) and the second vent (560B, 660B).

FIG. 1

FIG. 2     <u>200</u>

EP 4 675 772 A1

FIG. 3

EP 4 675 772 A1

FIG. 4

400

FIG. 5A

520B    560B    544B
540B

530

X
↑
└→Y

520A    544A    560A    540A
524                        522

502

FIG. 5B

600

FIG. 6

FIG. 7

FIG. 8

**EUROPEAN SEARCH REPORT**

Europäisches Patentamt
European Patent Office
Office européen des brevets

Application Number

EP 25 18 0617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/098808 A1 (GUEN MINHYUNG [KR]) 6 April 2017 (2017-04-06) | 1,2, 4-11,14, 15 | INV. H01M50/103 H01M50/308 |
| A | * paragraphs [0041], [0055], [0062], [0066] - [0069]; figures 2,4,7-9 * | 12,13 | H01M50/333 H01M50/342 H01M50/375 |
| X | EP 4 336 626 A1 (LG ENERGY SOLUTION LTD [KR]) 13 March 2024 (2024-03-13) * paragraphs [0057] - [0058]; figures 2, 4 * | 1-3,9 | ADD. H01M50/15 |
| X | EP 4 379 919 A1 (SK ON CO LTD [KR]) 5 June 2024 (2024-06-05) * paragraph [0030]; figure 5 * | 1-3 | |
| A | EP 4 148 879 A1 (SAMSUNG SDI CO LTD [KR]) 15 March 2023 (2023-03-15) * the whole document * | 1-15 | |
| A | US 2016/043368 A1 (KIM DUKJUNG [KR]) 11 February 2016 (2016-02-11) * the whole document * | 1-15 | |

TECHNICAL FIELDS SEARCHED (IPC)

H01M

The present search report has been drawn up for all claims

| Place of search | Date of completion of the search | Examiner |
|---|---|---|
| Munich | 7 November 2025 | Nogueira da Silva, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 675 772 A1

## ANNEX TO THE EUROPEAN SEARCH REPORT
## ON EUROPEAN PATENT APPLICATION NO.

EP 25 18 0617

07-11-2025

| Patent document cited in search report | | Publication date | Patent family member(s) | | Publication date |
|---|---|---|---|---|---|
| US 2017098808 | A1 | 06-04-2017 | CN | 106981596 A | 25-07-2017 |
| | | | KR | 20170039932 A | 12-04-2017 |
| | | | US | 2017098808 A1 | 06-04-2017 |
| EP 4336626 | A1 | 13-03-2024 | CN | 117501516 A | 02-02-2024 |
| | | | EP | 4336626 A1 | 13-03-2024 |
| | | | JP | 7714697 B2 | 29-07-2025 |
| | | | JP | 2024528783 A | 01-08-2024 |
| | | | KR | 20230162850 A | 29-11-2023 |
| | | | US | 2024387917 A1 | 21-11-2024 |
| | | | WO | 2023224384 A1 | 23-11-2023 |
| EP 4379919 | A1 | 05-06-2024 | CN | 118117251 A | 31-05-2024 |
| | | | EP | 4379919 A1 | 05-06-2024 |
| | | | KR | 20240080543 A | 07-06-2024 |
| | | | US | 2024178511 A1 | 30-05-2024 |
| EP 4148879 | A1 | 15-03-2023 | CN | 115799591 A | 14-03-2023 |
| | | | EP | 4148879 A1 | 15-03-2023 |
| | | | KR | 20230037895 A | 17-03-2023 |
| | | | KR | 20230158443 A | 20-11-2023 |
| | | | US | 2023079718 A1 | 16-03-2023 |
| US 2016043368 | A1 | 11-02-2016 | KR | 20160019251 A | 19-02-2016 |
| | | | US | 2016043368 A1 | 11-02-2016 |